# EUROPEAN PATENT SPECIFICATION

(11) **EP 3 245 711 B1**
(45) Date of publication and mention of the grant of the patent: **06.11.2024**
(21) Application number: 16701073.5
(22) Date of filing: 14.01.2016
(51) Int. Cl.: H02K 5/20, H02K 5/06

(54) **ROTARY ELECTRIC MACHINE**
ELEKTRISCHE DREHMASCHINE
MACHINE ÉLECTRIQUE TOURNANTE

(30) Priority: 15.01.2015 GB 201500668
(43) Date of publication of application: 22.11.2017
(73) Proprietor: EPROPELLED INC., Gilford NH 03249 (US)
(72) Inventor: SHIRAZEE, Nabeel, Cardiff South Glamorgan CF24 4LH (GB)
(74) Representative: Ipey
(86) International application number: PCT/GB2016/050082
(87) International publication number: WO 2016/113565

(56) References cited:
- EP-A2- 1 100 180
- WO-A1-2014/132364
- DE-A1- 19 651 959
- GB-A- 1 226 086
- JP-A- 2005 192 280
- US-A- 4 760 300
- US-A1- 2013 147 287
- US-B2- 8 922 072

## Description

This invention relates to a method for manufacturing a rotary electric machine such as a motor or a generator.

One problem with cooling is that the size of rotating machines is getting smaller due to new technologies being introduced, such as the use of improved magnets. A better way of cooling is achieved by using a direct cast cooling housing cast straight on to the stator of the motor or generator. This will eliminate any airgaps between the housing and the stator and provide it with a much bigger and better thermally conductive surface area that can increase the heat transfer rate from the stator to the cooling housing. Traditional methods for inner rotors have a cast jacket shrunk on to the stator. This method not only introduces airgaps between the stator and the housing but it also introduces stresses on the stator which deforms the magnetic circuit thereby increasing power loss and reducing efficiency.

A rotary electric machine comprises a rotor and a stator. It is common for a stator to be formed of a longitudinally extending stack of stator laminations.

A major problem with rotary electric machines is the generation of waste heat through magnetic, electrical and mechanical losses. This waste heat must be efficiently transferred from the machine to the surroundings in order to avoid heat-related failure such as damage to the stator/rotor winding insulation, magnets or bearing failure.

Traditionally cooling is achieved by providing a housing around the stator, which may be forced air cooled, convection air cooled, or liquid cooled. Forced cooling involves blowing air around the stator housing. Fins or other formations are typically provided on the stator housing in order to increase the surface area and hence enhance heat transfer. Convection air cooling occurs where air flow on its own removes heat by warm air rising from the surface of the housing.

In liquid cooling, the transfer of heat from the stator housing to the surroundings is via an intermediary liquid cooling circuit. A liquid coolant is passed through passages defined within or around the stator housing, whereupon heat generated during operation of the machine is transferred to the coolant. The coolant is then passed to a heat exchanger, commonly known as a radiator, having a large surface area exposed to the surroundings. As the coolant circulates through the radiator, heat is transferred from the liquid coolant to the surroundings. The liquid coolant could be, for example, water based or hydraulic oil.

At present, the housing for inner rotor machines is manufactured separately from the electric machine and subsequently fitted around the stator. This is achieved by sliding the housing onto the stator. The requirement for efficient heat transfer from the stator to the housing demands that there is a close fit between the exterior surface of the stator and the interior surface of the housing. Accordingly, the process of sliding the housing on to the stator requires heating of the housing and/or cooling of the stator in order to temporarily increase the space therebetween.

One problem with the above-described arrangement is that the outer diameter of the stator is not longitudinally uniform due to the varying diameters of the annular stator laminations. Accordingly, only the stator lamination or laminations having the largest outer diameter contact the interior surface of the housing. As a result, pockets of air gaps exist between the housing and all other laminations, which substantially impede the heat transfer from the stator to the housing. The thermal conductivity of air is around 0.028W/mK compared with aluminium which is around 200 W/mK. Therefore aluminium is over 7,000 times better than air in conducting heat and copper is around 14,000 times better than air in conducting heat.

Another disadvantage is that the process of longitudinally sliding the housing onto the stator and shrinking the housing around the stator can damage the structure of the stator. In particular, the sliding action can exert forces on the stator lamination stack, which may permanently distort the laminations. Furthermore, heat shrinking the housing onto the stator exerts compressive forces on the stator, which effects the magnetic domains and distorts the magnetic flux within the stator laminations. The magnetic permeability of the laminations also reduces and the coercivity of the material is also affected. Hence, the power loss of the laminations increases. Moreover, the magnetic field of the rotor interacts with the magnetic field of the stator in such a way that it applies a rotational force on the stator. Therefore, the housing has to be shrunk very tightly on to the stator especially in high torque applications. Otherwise, the stator will slip inside the housing if it is circular and damage to the stator will result.

One method that is used to improve the contact between the stator and the housing is by machining the surface of the stator to make it smooth. This increases cost and assembly time. Further, this process also damages the insulation layer between the stator laminations at the surfaces and can result in short circuits that may increase the stator losses even further.

DE 19651959 A1 discloses an example stator housing arrangement for internal rotor motor of railway vehicle drive. EP 1100180 A2 discloses an example electric motor. US 8,922,072 B1 discloses an example manufacturing method for a stator of an electrical machine and a method for manufacturing the electrical machine itself. US 4,760,300 discloses a squirrel-cage type rotor and a method for its manufacture. WO 2014132364 discloses an example mold stator and mold electric motor.

GB1226086 discloses a method of manufacturing a rotary electric machine, the method comprising pre-heating a stator of the machine, subsequently casting a housing around the stator.

In accordance with the present invention, as seen from a first aspect, there is provided a method of manufacturing a rotary electric machine, the method being of the kind disclosed in GB1226086 and being characterised in that the temperature of the solidifying casting is controlled such that a radially outer region of thereof cools first and the radially inner region cools last, so as to cause the softer inner cast material to squeeze out along the length of the stator.

It will be appreciated that, upon setting of the casting material, a cast housing is formed around the stator. The pre-heating prevents the stator from being compressed when the molten liquid cools onto the stator to form the jacket. The pre-heating reduces the stresses induced in the stator when the jacket shrinks and bonds to the stator laminations. The stator and jacket shrink together at different rates and, for the process to work, the rate of shrinkage and the start temperatures of the components should be calculated in advance such that there is near zero stress in the stator when the stator and jacket cool. This stress free method of forming a cast cooling jacket allows the stator to achieve optimum magnetic performance. It significantly improves the motor efficiency and its operation. The vibration between the moulded components is also considerably reduced.

The method may comprise the steps of:
locating the stator of the electric machine within a mould such that the stator defines a core; and
substantially filling the mould with a casting material.

The method may comprise the step of locating a tubular member within the mould prior to substantially filling the mould with said casting material.

The method may comprise the steps of:
locating an insert within the mould prior to substantially filling the mould with said casting material; and
removing the insert after formation of the housing to leave a cavity defining a fluid passage through the housing.

The method may comprise the step of pre-heating the tubular member in the mould before the casting step.

The method may comprise the step of supporting an inlet and an outlet of the tubular member relative to the mould before the casting step. This avoids the problem that the coils of the tubular member may try to unwind during the pre-heating process. The tubular member is held about 1.5mm to 2mm away from the stator stack such that the molten aluminium can flow underneath it. If a gap smaller than 1 mm is used, the molten aluminium may not be able to flow properly between the stator and the tubular member. This can cause hotspots in the stator during operation, which may lead to premature failure of the stator windings. This problem is solved by using a 0.5mm thick stamped sheet metal strip in the shape of a comb. These are positioned in about four equidistant places and slotted in a groove in the stator. The comb shape locates the tubular member and prevents it from touching the stator stack. In cast housings without the cooling pipes the comb strips are not required.

The method may comprise the step of supporting the tubular member inside the mould before the casting step.

In accordance with the present invention, as seen from a second aspect, there is provided a method of manufacturing a rotary electric machine, the method being of the kind disclosed in GB1226086 and being characterised in that it further comprises the step of controlling the temperature of the solidifying casting such that the radially inner region of the casting cools first and the radially outer region cools last.

This allows the inner soft cast material to squeeze out along the length of the stator relieving stress without applying radial stress on the stator, therefore, preserving the magnetic properties of the stator.

The method may comprise the steps of:
locating the stator of the electric machine around a mould such that the stator defines a housing; and
substantially filling the mould with a casting material.

The method may comprise the step of not removing the cast from the stator until after the core is formed.

The method may further comprise locating a tubular member, such as a pipe, within the mould. Alternatively, the method may comprise locating an insert within the mould, the insert being arranged such that, when removed, the associated cavity defines a fluid passage through the core.

Whilst the above aspects of the invention relate to casting a stator jacket around a so-called inner rotor machine, the invention is equally applicable to casting a cooling core inside a so-called outer rotor machine. Thus, the present application also relates to a method of forming an electric machine comprising a stator and a core directly cast inside the stator.

Advantageously, the core is bespoke to the stator in which it is cast. This is particularly advantageous if the stator comprises a stack of stator laminations since the variation in diameter of stator laminations will vary from one stator to another.

Furthermore, the need to slide the core inside the stator is obviated and hence the problems associated therewith, for example damage to the stator laminations, are alleviated. The stator laminations can have pre-cut notches in the stator laminations into which the cast flows and locks circumferentially on to the stator. Therefore, in a high torque application the direct cast core has forces evenly spread and the notches prevent the stator from rotating about the core.

Another advantage is that the core is not expanded inside the stator and thus the compressive forces on the stator are reduced or even eliminated.

Yet another advantage is that casting the core inside the electric machine, for example using high pressure die casting method, substantially reduces the assembly time, and hence the manufacturing cost. The core may extend substantially the full axial length of the stator or beyond. The core may be annular in cross-section.

The core may be formed of a material with high thermal conductivity such as aluminium or a composite material.

The core may be configured for air cooling. In this embodiment, the core may be formed with one or more hollow formations which increase the surface area of the core and hence improve the efficiency of heat transfer from the core to the surroundings.

Alternatively or additionally, the core may be configured for liquid cooling. One or more fluid passages may be defined within or around the core for conveying cooling fluid.

The fluid passages may be formed during casting of the core.

The fluid passages may be integrally formed with the core. Alternatively, the fluid passages may comprise pipes, channels or heat-pipes encapsulated by the core.

In heat-pipe cooling the heat from the core evaporates the liquid inside the heat-pipe thereby rapidly extracting heat away from the core. The other end of the heat-pipe which is remote from the core then condenses the liquid and gets rid of the heat.

The fluid passages may be arranged to extend substantially circumferentially around the core, for example in a helical manner. Alternatively, the fluid passages may be arranged to extend substantially longitudinally along the core.

Embodiments of the present invention will now be described by way of examples only and with reference to the accompanying drawings, in which:
Figure 1 is a cut away view of an embodiment of electric machine formed in accordance with the method of the first aspect of the present invention;
Figure 2 is an enlarged view of a portion of the machine and housing of Figure 1;
Figure 3 is a cut away view of an alternative embodiment of electric machine formed in accordance with the method of the second aspect of the present invention; and
Figure 4 is a flow diagram illustrating an embodiment of method in accordance with the first or second of the present invention for manufacturing the electric machine illustrated in Figures 1 and 2 or Figure 3.

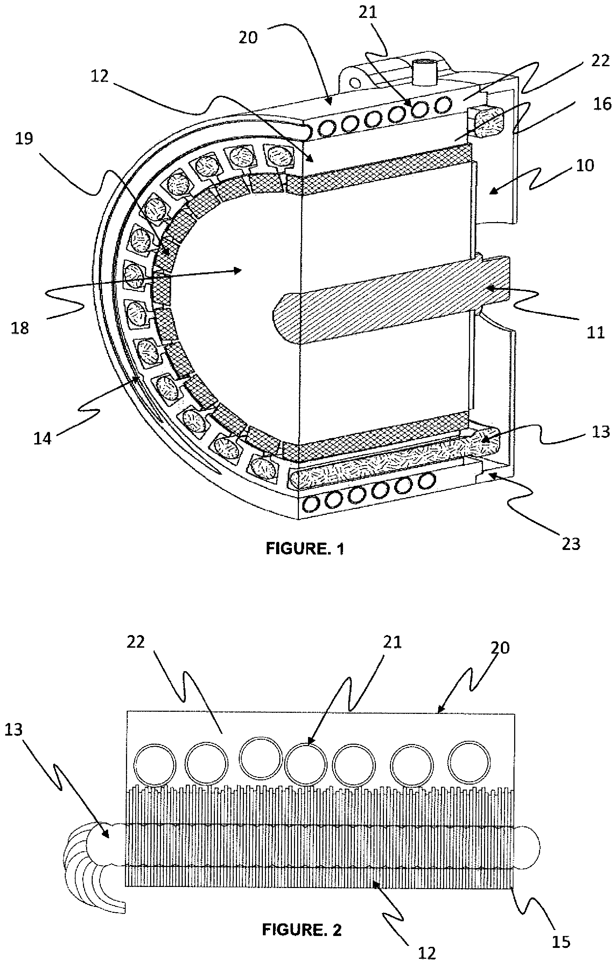

Referring to Figures 1 and 2 of the drawings, there is illustrated a so-called inner-rotor electric motor 10 surrounded by a cooling housing 20.

The electric motor 10 comprises a shaft 11 and a rotor 18 arranged for rotation within a stator 12. In this example the rotor 18 has permanent magnets 19 on its surface.

The stator 12 includes enamelled copper clad aluminium (ECCA) stator windings 13 encased within a stator core 16. The ECCA winding is about 30% lighter and 30% cheaper than copper windings. The stator core 16 is formed of a plurality of stator laminations 15 arranged in a longitudinal stack or made from a single spiral lamination known as slinky. The advantage of a slinky is that the cost of the stator is about 30% to 40% less than a stator with a plurality of laminations. It is generally desired to form the stator core 16 from laminations in order to minimise hysteresis and eddy current losses within the stator 12. 14 is a locking notch in the stator core 16: This prevents the stator 12 from rotating inside the housing 20 under high torque loads at the shaft 11. Each stator lamination 15 is formed of electrical steel and is annular disc shape however it can also be of other shapes, save for formations arranged to cooperate with the stator windings 13. It is common for there to be small variations in the radial extent of the laminations 15 due to manufacturing tolerances and the like. As a result, the outer and inner diameters of the stator 12 are not, in general, longitudinally or circumferentially uniform as shown in Figure 2.

The cooling housing 20 is arranged to surround the stator 12 along the full axial length of the latter. The housing 20 is formed of an aluminium alloy that has been cast around the stator 12 as will be described hereinafter.

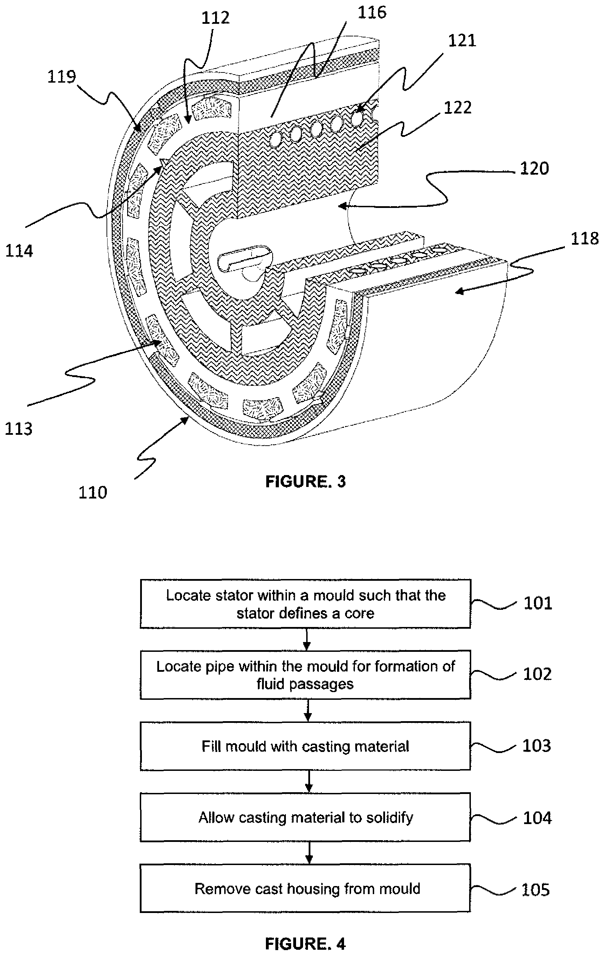

A method of forming the housing 20 in accordance with an embodiment of the present invention is illustrated in figure 4 of the drawings. At step 101, the stator 12 is located substantially radially centrally within a generally cylindrical mould (not shown). The stator 12 thus defines a core within the mould. The longitudinal openings of the stator 12 are sealed in order to prevent the casting material from entering the radially inner part of the stator 12 arranged to receive the rotor 18. Accordingly, when the stator 12 is located within the mould, a resulting cavity in which casting material may be received is substantially but not necessarily tubular and is defined between the stator 12 and the mould and is substantially coaxial with both the stator 12 and the mould. In another embodiment where the stator is inside the rotor (figure 3), the casting material is entered in the centre of the stator.

At step 102, a circular or rectangular pipe or a heatpipe 21 is inserted within the mould. In the illustrated embodiment, the pipe 21 is circumferentially wound around the stator 12. In an alternative embodiment (not shown), the pipe may be arranged to extend longitudinally along the stator 12 and double-back on itself at each longitudinal end of the stator 12. In another alternative embodiment (not shown), a series of pipes may be inserted within the mould in a configuration which enables fluidic coupling of the pipes or heat-pipes by means of a manifold in a housing end-portion or the like. It will be appreciated that in all of the above-described embodiments, the pipe or heat-pipes 21 are located within the cavity in which casting material will be received, namely the cavity defined between the outer face of the stator 12 and the inner face of the mould.

At step 103, the cavity defined between the outer face of the stator 12 and the inner face of the mould is filled with casting material 22 such as a molten aluminium alloy. The molten casting material is allowed to solidify at step 104 so as to form a cast housing 20.

Once the casting material has fully cooled and solidified, the cast housing 20 is removed from the mould at step 105. The pipe 21 and stator 12 are not removed from the cast housing.

After the process of casting the housing 20 has been completed, the longitudinal ends of the pipe 21 may be connected to a cooling circuit (not shown). The cooling circuit may be conventional, for example the cooling circuit may comprise a pump and a radiator. In use, the fluid flow through the pipe 21 within the cooling housing 20 transports heat away from the motor 10 and hence reduces the risk of heat-related failure of the motor 10. In the case of heat-pipes the cooling circuit is within the pipe. Here the exposed ends of the heat-pipes are cooled with conventional methods. Heat pumps can also be used in order to recover the heat and convert it back to electricity.

As a result of the casting process, the irregularities in the outer surface of the stator 12 that exist as a result of the varying outer diameters of the stator laminations 15 are exactly mirrored by irregularities in the inner surface of the housing. Accordingly, there are no spaces between the stator 12 and the housing 20, thereby optimising the heat transfer from the stator 12 to the housing 20. Furthermore, the irregularity of the outer surface of the stator 12 and the corresponding irregularity of the inner surface of the housing 20 produces a keying effect that improves adhesion of the housing 20 to the stator 12. The stator may also have keying notches 14.

Substantially discoidal housing end portions 23 may also be produced. The housing end portions 23 are produced separately from the above-described housing 20 and are detachably engageable with the longitudinal ends of the housing 20 or the longitudinal ends of the stator 12.

Optionally, the step 102 may comprise pre-heating the stator 12 and optionally the pipe 21 before the mould is filled at step 103.

Referring to figure 3 of the drawings, there is illustrated a so-called outer-rotor electric motor 110 surrounding a cooling core 120.

The electric motor 110 comprises a shaft (not shown) and a stator 112 arranged for rotation within a rotor 118. In this example the rotor 118 has permanent magnets 119 on its internal surface.

The stator 112 includes enamelled copper clad aluminium (ECCA) stator windings 113 encased within a stator jacket 116. The ECCA winding is about 30% lighter and 30% cheaper than copper windings. The stator jacket 116 is formed of a plurality of stator laminations arranged in a longitudinal stack or made from a single spiral lamination known as slinky. 114 is the locking notch in the stator jacket 116: This prevents the stator 112 from rotating relative to the cooling core 120 under high torque loads at the shaft (not shown). Each stator lamination is formed of electrical steel and is annular disc shape however it can also be of other shapes, save for formations arranged to cooperate with the stator windings 113. It is common for there to be small variations in the radial extent of the laminations due to manufacturing tolerances and the like. As a result, the outer and inner diameters of the stator 12 are not, in general, longitudinally or circumferentially uniform.

The stator 112 is arranged to surround the cooling core 120 along the full axial length of the latter. The cooling core 120 is formed of an aluminium alloy that has been cast inside the stator 112 in a similar manner to that described in figure 3.

Whilst the above description relates to a motor, it will be appreciated that the present invention is also applicable to a generator or other similar machine.

## Claims

1. A method of manufacturing a rotary electric machine, the method comprising pre-heating a stator (12) of the machine, subsequently casting a housing (20) around the stator (12), **characterised in that** the temperature of the solidifying casting is controlled such that a radially outer region of thereof cools first and the radially inner region cools last, so as to cause the softer inner cast material to squeeze out along the length of the stator (12).

2. A method according to claim 1, wherein the method comprises:
locating the stator (12) of the electric machine within a mould such that the stator defines a core;
substantially filling the mould with a casting material.

3. A method according to claim 2, further comprising the step of locating a tubular member (21) within the mould prior to substantially filling the mould with said casting material.

4. A method according to claim 2, further comprising the steps of:
locating an insert within the mould prior to substantially filling the mould with said casting material; and
removing the insert after formation of the housing to leave a cavity defining a fluid passage through the housing (20).

5. A method according to claim 3, further comprising the step of pre-heating the tubular member (21) in the mould before the casting step.

6. A method according to claim 3, further comprising the step of supporting an inlet and an outlet of the tubular member (21) relative to the mould before the casting step.

7. A method according to claim 3, further comprising the step of supporting the tubular member (21) inside the mould before the casting step.

8. A method of manufacturing a rotary electric machine, the method comprising pre-heating a stator (112) of the machine, subsequently casting a core (122) inside the stator (112), **characterised in that** the temperature of the solidifying casting is controlled such that the radially inner region of the casting cools first and the radially outer region cools last.

9. A method as claimed in claim 8, wherein the method comprises:
locating the stator (112) of the electric machine around a mould such that the stator (112) defines a housing; and,
substantially filling the mould with a casting material.

10. A method as claimed in claim 9, wherein the cast core (122) is not removed from the stator (112) after the core (122) is formed.

11. A method as claimed in any of claims 8 to 11, wherein method further comprises locating a tubular member (121) within the mould.

12. A method for manufacturing a rotary electric machine as claimed in any of claims 8 to 11, wherein method further comprises locating an insert within the mould, the insert being arranged such that, when removed, the associated cavity defines one or more fluid passages through the core (122).

## Patentansprüche

1. Verfahren zum Herstellen einer elektrischen Drehmaschine, wobei das Verfahren Vorheizen eines Stators (12) der Maschine und anschließendes Gießen eines Gehäuses (20) um den Stator (12) umfasst, **dadurch gekennzeichnet, dass** die Temperatur des erstarrenden Gusses so gesteuert wird, dass ein radial äußerer Bereich desselben zuerst abkühlt und der radial innere Bereich zuletzt abkühlt, um zu veranlassen, dass das weichere innere Gussmaterial entlang der Länge des Stators (12) herausgedrückt wird.

2. Verfahren nach Anspruch 1, wobei das Verfahren ferner Folgendes umfasst:
Platzieren des Stators (12) der elektrischen Maschine innerhalb einer Form, sodass der Stator einen Kern definiert;
weitgehendes Füllen der Form mit einem Gussmaterial.

3. Verfahren nach Anspruch 2, ferner umfassend den Schritt des Platzierens eines röhrenförmigen Elements (21) innerhalb der Form vor dem weitgehenden Füllen der Form mit dem Gussmaterial.

4. Verfahren nach Anspruch 2, ferner umfassend die folgenden Schritte:
Platzieren eines Einsatzes innerhalb der Form vor dem weitgehenden Füllen der Form mit dem Gussmaterial; und
Entfernen des Einsatzes nach Bildung des Gehäuses, um einen Hohlraum, der einen Fluiddurchgang durch das Gehäuse (20) definiert, zu hinterlassen.

5. Verfahren nach Anspruch 3, ferner umfassend den Schritt des Vorheizens des röhrenförmigen Elements (21) in der Form vor dem Gussschritt.

6. Verfahren nach Anspruch 3, ferner umfassend den Schritt des Stützens eines Einlasses und eines Auslasses des röhrenförmigen Elements (21) relativ zu der Form vor dem Gussschritt.

7. Verfahren nach Anspruch 3, ferner umfassend den Schritt des Stützens des röhrenförmigen Elements (21) in der Form vor dem Gussschritt.

8. Verfahren zum Herstellen einer elektrischen Drehmaschine, wobei das Verfahren Vorheizen eines Stators (112) der Maschine und anschließendes Gießen eines Kerns (122) in dem Stator (112) umfasst, **dadurch gekennzeichnet, dass** die Temperatur des erstarrenden Gusses so gesteuert wird, dass der radial innere Bereich des Gusses zuerst abkühlt und der radial äußere Bereich zuletzt abkühlt.

9. Verfahren nach Anspruch 8, wobei das Verfahren Folgendes umfasst:
Platzieren des Stators (112) der elektrischen Maschine um eine Form, sodass der Stator (112) ein Gehäuse definiert; und,
weitgehendes Füllen der Form mit einem Gussmaterial.

10. Verfahren nach Anspruch 9, wobei der Gusskern (122) nicht von dem Stator (112) entfernt wird, nachdem der Kern (122) gebildet worden ist.

11. Verfahren nach einem der Ansprüche 8 bis 11, wobei das Verfahren ferner Platzieren eines röhrenförmigen Elements (121) innerhalb der Form umfasst.

12. Verfahren zum Herstellen einer elektrischen Drehmaschine nach einem der Ansprüche 8 bis 11, wobei das Verfahren ferner Platzieren eines Einsatzes innerhalb der Form umfasst, wobei der Einsatz so angeordnet ist, dass, wenn er entfernt wird, der zugeordnete Hohlraum einen oder mehrere Fluiddurchgänge durch den Kern (122) definiert.

## Revendications

1. Procédé de fabrication d'une machine électrique tournante, le procédé comprenant le préchauffage d'un stator (12) de la machine, ensuite la coulée d'un logement (20) autour du stator (12), **caractérisé en ce que** la température de la coulée de solidification est contrôlée de telle sorte qu'une région radialement externe de celle-ci se refroidit en premier et que la région radialement interne se refroidit en dernier, de façon à provoquer l'expulsion du matériau coulé interne plus souple suivant la longueur du stator (12).

2. Procédé selon la revendication 1, le procédé comprenant :
le placement du stator (12) de la machine électrique au sein d'un moule de telle sorte que le stator définit un noyau ;
le remplissage sensible du moule avec un matériau de coulée.

3. Procédé selon la revendication 2, comprenant en outre l'étape de placement d'un organe tubulaire (21) au sein du moule avant de remplir sensiblement le moule avec ledit matériau de coulée.

4. Procédé selon la revendication 2, comprenant en outre les étapes de :
placement d'un insert au sein du moule avant de remplir sensiblement le moule avec ledit matériau de coulée ; et
retrait de l'insert après la formation du logement pour laisser une cavité définissant un passage de fluide à travers le logement (20).

5. Procédé selon la revendication 3, comprenant en outre l'étape de préchauffage de l'organe tubulaire (21) dans le moule avant l'étape de coulée.

6. Procédé selon la revendication 3, comprenant en outre l'étape de support d'une entrée et d'une sortie de l'organe tubulaire (21) par rapport au moule avant l'étape de coulée.

7. Procédé selon la revendication 3, comprenant en outre l'étape de support de l'organe tubulaire (21) à l'intérieur du moule avant l'étape de coulée.

8. Procédé de fabrication d'une machine électrique tournante, le procédé comprenant le préchauffage d'un stator (112) de la machine, ensuite la coulée d'un noyau (122) à l'intérieur du stator (112), **caractérisé en ce que** la température de la coulée de solidification est contrôlée de telle sorte que la région radialement interne de la coulée se refroidit en premier et que la région radialement externe se refroidit en dernier.

9. Procédé selon la revendication 8, le procédé comprenant :
le placement du stator (112) de la machine électrique autour d'un moule de telle sorte que le stator (112) définit un logement ; et,
le remplissage sensible du moule avec un matériau de coulée.

10. Procédé selon la revendication 9, dans lequel le noyau coulé (122) n'est pas retiré du stator (112) après la formation du noyau (122).

11. Procédé selon l'une quelconque des revendications 8 à 11, le procédé comprenant en outre le placement d'un organe tubulaire (121) au sein du moule.

12. Procédé de fabrication d'une machine électrique tournante selon l'une quelconque des revendications 8 à 11, le procédé comprenant en outre le placement d'un insert à l'intérieur du moule, l'insert étant agencé de telle sorte que, lorsqu'il est retiré, la cavité associée définit un ou plusieurs passages de fluide à travers le noyau (122).
